(19)

**Europäisches Patentamt**
**European Patent Office**
**Office européen des brevets**

(11) **EP 4 344 911 B1**

(12) **EUROPEAN PATENT SPECIFICATION**

(45) Date of publication and mention
of the grant of the patent:
**28.01.2026 Bulletin 2026/05**

(21) Application number: **21961961.6**

(22) Date of filing: **29.10.2021**

(51) International Patent Classification (IPC):
**B60H 1/00** *(2006.01)*     **B60H 1/14** *(2006.01)*
**B60H 1/32** *(2006.01)*

(52) Cooperative Patent Classification (CPC):
**B60H 1/143; B60H 1/00278; B60H 1/00899;**
B60H 1/3213; B60H 2001/003; B60H 2001/00307;
B60H 2001/00949; B60H 2001/3258

(86) International application number:
**PCT/CN2021/127732**

(87) International publication number:
**WO 2023/070609 (04.05.2023 Gazette 2023/18)**

(54) **VEHICLE HEATING CONTROL METHOD AND APPARATUS, DEVICE, MEDIUM, AND PROGRAM PRODUCT**

VERFAHREN UND VORRICHTUNG ZUR FAHRZEUGHEIZUNGSSTEUERUNG, VORRICHTUNG, MEDIUM UND PROGRAMMPRODUKT

PROCÉDÉ ET APPAREIL DE COMMANDE DE CHAUFFAGE DE VÉHICULE, DISPOSITIF, SUPPORT ET PRODUIT PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.04.2024 Bulletin 2024/14**

(73) Proprietors:
• **Zhejiang Geely Holding Group Co., Ltd.**
**Hangzhou, Zhejiang 310051 (CN)**
• **Geely Automobile Research Institute (Ningbo) Co., Ltd.**
**Ningbo, Zhejiang 315336 (CN)**

(72) Inventors:
• **LI, Shuangqi**
**Hangzhou, Zhejiang 310051 (CN)**
• **CHANG, Hao**
**Hangzhou, Zhejiang 310051 (CN)**

(74) Representative: **Barker Brettell LLP**
**100 Hagley Road**
**Edgbaston**
**Birmingham, West Midlands B16 8QQ (GB)**

(56) References cited:
CN-A- 110 217 071     CN-A- 110 217 071
CN-A- 111 959 224     CN-A- 111 959 224
CN-U- 202 923 336     CN-U- 202 923 336
CN-U- 209 466 956     CN-U- 209 466 956
JP-A- 2012 239 344     JP-A- 2012 239 344
US-A1- 2014 041 826     US-A1- 2017 096 048
US-A1- 2017 096 048     US-A1- 2020 101 815

EP 4 344 911 B1

## Description

### TECHNICAL FIELD

The present application relates to the technical field of new energy vehicles, and in particular, to a vehicle heating control method and apparatus, a device, a medium and a program product.

### BACKGROUND

With the development of vehicle technology, new energy vehicles have become the main trend of future automobile development. Although there are many solutions for indoor environment control in the traditional automotive field, new energy vehicles will face new challenges due to the introduction of high-power drive motors and large capacity batteries, which will have a new impact on existing vehicle thermal management.

In low-temperature weather, due to low temperature of a battery, working performance thereof will be affected, then it is necessary to heat the battery. However, if there is also a heating requirement in a passenger compartment, since the heating capacity of the vehicle is limited, how to achieve heating distribution and control therebetween has become an urgent technical problem to be solved for the new energy vehicles.

Therefore, how to distribute and control the heating capacity of the new energy vehicles is a technical problem to be solved in the present application. A vehicle heating control method and apparatus are known from US 2020/101815 A1.

### SUMMARY

A purpose of the present application is to provide a vehicle heating control method and apparatus, a device, a medium and a program product. A heat pump system heats a passenger compartment first, after air temperature at an outlet reaches a target temperature, the heat pump system heats coolant through a warm air core, and then guides the heated coolant into a battery circuit to transfer heat to a battery, thereby increasing battery temperature and solving the technical problem that how to distribute and control heating capacity of a new energy vehicle.

In a first aspect, the present application discloses a vehicle heating control method, including:

turning on a passenger compartment heating mode when detecting that a heating requirement exists in both a passenger compartment and a battery of a target vehicle, where the passenger compartment heating mode is used to perform heating process on air in the passenger compartment by using a heat exchanger of a heat pump system and/or a coolant circulation system in an air handling unit;

monitoring in real time whether air temperature at an air outlet or operating time of the passenger compartment heating mode meets a first preset requirement;

if yes, turning on a diversion mode and sending a preset control instruction to a target device, where the preset control instruction is used to heat coolant in a warm air circuit by using the heat pump system, and divert the coolant to a battery circuit to heat the battery, where the coolant circulation system includes the warm air circuit and the battery circuit.

Based on the above technical content, when there is a heating requirement for both the passenger compartment and the battery simultaneously, the passenger compartment is first heated, after the air temperature at the air outlet meets a preset requirement or the heating time for the passenger compartment reaches to a preset time, the simultaneous heating of the passenger compartment and the battery is turned on, the heat pump system is used to transfer heat to the heating circuit, which is more efficient and energy-saving than directly heating the coolant through the heater of the heating circuit. It can not only ensure the comfort of the passenger compartment, but also achieve efficient and energy-saving heating of the battery. The heating capacity of the heat pump system is more fully utilized.

In an implementation, the turning on the diversion mode and sending the preset control instruction to the target device includes:

sending a first closed-loop control instruction to a compressor in the heat pump system;

sending a first rotary speed control instruction to a water pump in the warm air circuit, so as to increase rotary speed of the water pump from a first rotary speed to a second rotary speed in a first preset manner;

sending a diversion instruction to a first multi-way valve, where the diversion instruction is used to switch a second output end of the first multi-way valve from a closed state to an open state in a second preset manner, so as to guide the coolant of the warm air circuit into the battery circuit, and to heat the battery through the coolant, where an input end and a first output end of the first multi-way valve are connected to the warm air circuit, and the second output end is connected to the battery circuit.

The compressor is still used to perform a closed-loop control on the air temperature at the air outlet, the first multi-way valve and the water pump cooperate with each other, after the heat pump system heats the air in the air handling unit, the coolant in a warm air core is heated when the air flows through the warm air core, then the heated coolant is slowly guided into the battery circuit with the cooperation of the first multi-way valve and the water pump, and the battery is heated through the battery circuit, finally, it achieves heating the battery through the heat pump system instead of using a heater in the coolant circulation system, and the heating efficiency of the heat pump system is higher and more energy-saving.

In an implementation, turning on the diversion mode and sending the preset control instruction to the target device further includes:

obtaining a total heating load of the passenger compartment and the battery;
determining whether the total heating load exceeds heating upper limit of the heat pump system;
if yes, turning on a heater of the coolant circulation system to supplement heat.

Since the heating capacity of the heat pump system is limited, when the heating capacity of the heat pump system is not enough to meet the common heating needs of the passenger compartment and the battery, an additional heater needs to be turned on to heat the coolant, so as to compensate the insufficient heating power of the heat pump system and ensure that the passenger compartment and the battery can be maintained within a suitable working range.

In an implementation, before turning on the heater of the coolant circulation system to supplement heat, the method further includes:

monitoring in real time whether the air temperature at the air outlet meets a second preset requirement;
if yes, turning on the heater;
sending a second closed-loop control instruction to the heater;
sending a first control instruction to the compressor to enable the compressor to operate at a preset rotary speed;
if not, turning off the heater.

In order to avoid heater failure or a decrease in the lifespan of the heater due to frequent switching of the heater caused by temperature fluctuations at the air outlet, an error range, that is, the second preset requirement, is provided for the air outlet temperature, which can avoid the problems of sensor temperature drift or frequent switching of the heater caused by temperature fluctuations at the air outlet.

In one implementation, the turning on the passenger compartment heating mode includes:

obtaining a first heating load of the passenger compartment;
determining to turn on a single heat pump mode if the first heating load is less than or equal to a load threshold, where the single heat pump mode is used to individually control the heat pump system to heat the air in the passenger compartment;
sending a second control instruction to the compressor to maximize heating capacity of the compressor;
monitoring the air temperature at the air outlet in real time;
sending a third closed-loop control instruction to the compressor to enable the compressor to enter a closed-loop control state when a temperature difference between the air temperature and target temperature is less than or equal to a first preset threshold.

The first heating load is less than or equal to the load threshold, which proves that the heat pump system is sufficient to provide sufficient heating capacity to meet the heating needs of the passenger compartment. Therefore, the compressor is allowed to quickly raise the temperature of the passenger compartment with maximum heating capacity to improve the user experience. After the air temperature at the air outlet reaches the preset target temperature, the compressor enters closed-loop control to reduce temperature fluctuations at the air outlet and achieve energy-saving technical effects.

In an implementation, the coolant circulation system further includes a motor circuit, and after turning on the passenger compartment heating mode, the method further includes:

obtaining a first temperature of the coolant in the motor circuit and a second temperature of the battery;
sending a connection instruction to a second multi-way valve to connect the motor circuit and the battery circuit when a temperature difference between the first temperature and the second temperature is greater than or equal to a second preset threshold, and to transfer heat generated by operation of a motor to the battery through the coolant.

After the vehicle is driven, the operation of the motor will generate heat. In order to fully utilize the heat, the heat can be used to heat the battery before turning on the heater, so as to achieve further energy-saving effects.

In a second aspect, the present application discloses a vehicle heating control apparatus, including:

a processing module, configured to turn on a passenger compartment heating mode when detecting that a heating requirement exists in both a passenger compartment and a battery of a target vehicle, where the passenger compartment heating mode is used to perform heating process on air in the passenger compartment by using a heat exchanger of a heat pump system and/or a coolant circulation system in the air handling unit;
a monitoring module, configured to monitor in real time air temperature at an air outlet and operating time of the passenger compartment heating mode;
when the air temperature or the operating time meets a first preset requirement, the processing module is further configured to turn on a diversion mode and sending a preset control instruction to a target device, where the preset control instruction is used to heat coolant in a warm air circuit by using the heat pump system, and divert the coolant to a battery circuit to heat the battery, where the coolant circulation system includes the warm air circuit and the battery circuit.

In a third aspect, the present application discloses an electronic device, including: a processor, and a memory connected to the processor in a communication way;

the memory stores computer execution instructions;
the processor executes the computer execution instructions stored in the memory to implement any possible vehicle heating control method in the first aspect.

In a fourth aspect, the present application discloses a computer-readable storage medium storing computer execution instructions which, when executed by a processor, implement any possible vehicle heating control method in the first aspect.

In a fifth aspect, the present application discloses a computer program product, including a computer program which, when executed by a processor, implements any possible vehicle heating control method in the first aspect.

In a sixth aspect, the present application discloses a computer program, including a program code, when a computer runs the computer program, the program code executes any possible vehicle heating control method in the first aspect.

Based on the above technical solution, the present application provides a vehicle heating control method and apparatus, a device, a medium, and a program product. The method includes: turning on a passenger compartment heating mode when detecting that a heating requirement exists in both a passenger compartment and a battery of a target vehicle, where the passenger compartment heating mode is used to perform heating process on air in the passenger compartment by using a heat exchanger of a heat pump system and/or a coolant circulation system in an air handling unit; then monitoring in real time whether air temperature at an air outlet or operating time of the passenger compartment heating mode meets a first preset requirement; if yes, turning on a diversion mode and sending a preset control instruction to a target device, where the preset control instruction is used to heat coolant in a warm air circuit by using the heat pump system, and divert the coolant to a battery circuit to heat the battery. It solves the technical problem that how to distribute and control heating capacity of new energy vehicles, and achieves the technical effect of using the heat pump system to heat the battery, not only improving heating efficiency but also saving energy.

## BRIEF DESCRIPTION OF DRAWINGS

FIG. 1 is a schematic structural diagram of a vehicle-mounted heat pump system and a coolant circulation system provided by an embodiment of the present application.
FIG. 2 is a flowchart of a vehicle heating control method provided by an embodiment of the present application.
FIG. 3A and 3B are flowcharts of another vehicle heating control method provided by an embodiment of the present application.
FIG. 4 is a schematic structural diagram of another vehicle-mounted heat pump system and coolant circulation system provided by an embodiment of the present application.
FIG. 5 is a flowchart of yet another vehicle heating control method provided by an embodiment of the present application.
FIG. 6 is a schematic structural diagram of a vehicle heating control apparatus provided by an embodiment of the present application.
FIG. 7 is a schematic structural diagram of an electronic device provided by an embodiment of the present application.

## DETAILED DESCRIPTION OF EMBODIMENTS

In order to make the purpose, technical solutions and advantages of embodiments of the present disclosure clearer, the technical solutions in the embodiments of the present application will be clearly and completely described below in combination with the accompanying drawings of the embodiments of the present application. It is clear that the embodiments described are a part of the embodiments of the present application, and not all of them. Based on the embodiments of the present application, all other embodiments obtained by those of ordinary skill in the art without creative effort, including but not limited to a combination of multiple embodiments, fall within the protection scope of the present application.

The terms "first", "second", "third", "fourth", etc. (if any) in the specification and claims of the present application, as well as the accompanying drawings, are used to distinguish similar objects and need not be used to describe a specific order or sequence. It should be understood that the data used in this way can be interchanged in appropriate circumstances, so that the embodiments of the present application described herein, for example, can be implemented in order other than those illustrated or described herein. In addition, the terms "including" and "having", as well as any variations thereof, are intended to cover non-exclusive inclusion, for example, a process, method, system, product, or device that includes a series of steps or units need not be limited to those clearly listed steps or units, but may include other steps or units that are not clearly listed or inherent to these processes, methods, products, or devices.

First, the terms involved in the present application will be explained as following.

PTC (Positive Temperature Coefficient) heater: composed of a PTC ceramic heating element and an aluminum tube. This type of PTC heating element has the advantages of small thermal resistance and high heat exchange efficiency. It is an automatic constant temperature and power-saving electric heater. The prominent feature lies in its safety performance, under any application situation, there will be no "redness" phenomenon on the surface of electric heating tube heaters, which can cause safety hazards such as burns and fires.

The inventive concept of the present application is:

the inventor of the present application have found that prior art generally directly turns on the PTC heater to heat the coolant in the battery circuit when it is necessary to heat up the battery. Then, when the coolant circulates in the battery circuit, the heat is transferred to the battery. However, if the heating capacity of the heat pump system is not fully utilized at this time, it will cause energy waste, compared to the PTC heater, the heat pump system heats the coolant through the warm air core in the air handling unit, which has higher heating efficiency and is more energy-saving.

Therefore, how to fully utilize the heating capacity of the heat pump system, distribute its heating capacity, and add PTC auxiliary heating at the appropriate time are critical to achieve good heating effects for both the passenger compartment and the battery, and efficient and energy-saving heating of the battery while ensuring the comfort of the passenger compartment.

A specific application scenario of the present application is as following.

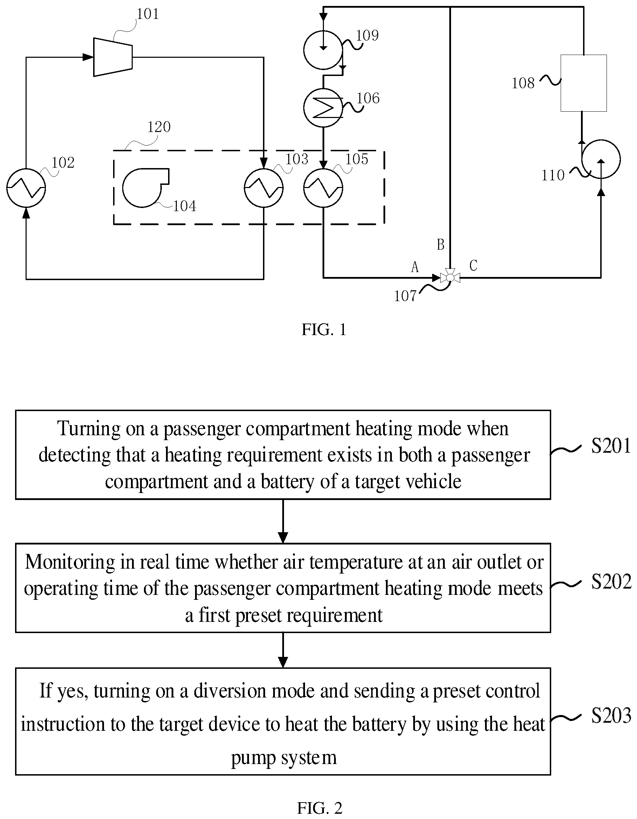

FIG. 1 is a schematic structural diagram of a vehicle-mounted heat pump system and a coolant circulation system provided by the present application. As shown in FIG. 1, the vehicle-mounted heat pump system includes: a compressor 101, an evaporator 102, a condenser 103, a blower 104, an air handling unit 120, etc. The coolant circulation system includes: a warm air core 105, a PTC heater 106, a three-way valve 107, a battery 108, a warm air circuit pump 109, a battery circuit pump 110, etc.

Where, the compressor 101 compresses the gaseous refrigerant and inputs it into the condenser 103 for heat release and condensation. At this time, the blower 104 blows the air in the passenger compartment to the condenser 103 for heating, then blows it back to the passenger compartment from the air outlet to realize heating of the passenger compartment. The condensed refrigerant enters the evaporator 102 to perform heat absorption and evaporation, and finally the refrigerant returns to the compressor 101 again.

The coolant circulation system includes two circuits:

a warm air circuit: starting from the warm air circuit pump 109, passing through the PTC heater 106 and the warm air core 105, then flowing from an input end A of the three-way valve 107, passing through a first output end B and returning to the warm air circuit pump 109.

a battery circuit: flowing from the input end A of the three-way valve 107, passing through the second output end C, passing through the battery circuit pump 110 and the battery 108, and then returning to the warm air circuit pump 109.

It should be noted that when the three-way valve 107 opens the second output end C, the coolant heated by the warm air core 105 is enabled to flow into the battery circuit.

The technical solution of the present application and how the technical solution of the present application solves the above technical problems will be described in detail below with specific embodiments. The following specific embodiments can be combined with each other, and the same or similar concepts or processes may not be described again in some embodiments. The embodiments of the present application will be described below with reference to the accompanying drawings.

FIG. 2 is a flowchart of a vehicle heating control method provided by an embodiment of the present application. As shown in FIG. 2, specific steps of the vehicle heating control method include the following.

S201, turning on a passenger compartment heating mode when detecting that a heating requirement exists in both a passenger compartment and a battery of a target vehicle.

In this step, the passenger compartment heating mode is used to heat the air in the passenger compartment by using a heat exchanger of a heat pump system and/or a coolant circulation system in the air handling unit.

Specifically, the passenger compartment heating mode at least includes the following situations.

(1) heating the air in the passenger compartment individually by using the heat pump system.
As shown in FIG. 1, the blower 104 blows the air in the passenger compartment to the condenser 103 for heating, and then blows the air back to the passenger compartment from the air outlet. At this time, since the refrigerant input from the compressor 101 condenses and releases heat, the condenser 103 achieves air heating.
(2) heating the air in the passenger compartment individually by the coolant circulation system.
As shown in FIG. 1, the blower 104 blows the air in the passenger compartment to the warm air core 105 for heating, and then blows the air back to the passenger compartment from the air outlet. At this time, the coolant is input into the PTC heater 106 through the warm air circuit pump 109 for heating, and then flows into the heater core 105, the air is heated by the warm air core 105.
(3) heating the air in the passenger compartment simultaneously by both the heat pump system and the coolant circulation system.

The heat pump system and the coolant circulation system are turned on for heating at the same time, that is, the blower 104 blows the air in the passenger compartment to the condenser 103 and the warm air core 105 for heating, and then blows it back to the passenger compartment from the air outlet.

It should be noted that when both the passenger compartment and battery of the target vehicle have a heating requirement simultaneously, under an ideal situation, if the rated heating power of each of the vehicle-mounted heat pump system and the coolant circulation system is large enough, the vehicle-mounted heat pump system can heat the passenger compartment individually according to a traditional heating method (i.e., a heating principle of the air conditioning system), and the coolant circulation system can also heat the battery individually according to a traditional method (i.e., heating the coolant to transfer heat to the battery). The heating processes of the two are independent heating processes without the need for coupling.

However, the reality is that due to cost constraints, rated power of the vehicle-mounted heat pump system and the coolant circulation system are both limited, that is, total heating power of the target vehicle is limited, and unable to meet the total heating power demand of both the passenger compartment and the battery, or in other words, the total heating power demand of the target vehicle is greater than the total heating power. That is, the vehicle heating control method provided by the embodiment of the present application is carried out when both the passenger compartment and the battery have a heating requirement simultaneously and the total heating demand power of the target vehicle is greater than the total heating power.

However, at this time, the total heating power of the vehicle mounted heat pump system and the coolant circulation system is greater than or equal to the first heating demand power of the passenger compartment or the second heating demand power of the battery, therefore, the vehicle heating control method provided in the embodiment of the present application combines the vehicle mounted heat pump system and the coolant circulation system, and distributes the total heating power to the first heating demand power and the second heating demand power in sequence, and priority is given to ensuring the heating demand of the passenger compartment, solving the contradiction between heating demand and total heating supply by optimizing the allocation method.

S202, monitoring in real time whether air temperature at an air outlet or operating time of the passenger compartment heating mode meets a first preset requirement.

In this step, the first preset requirement includes: the air temperature at the air outlet reaches the target air outlet temperature, or the operating time of the passenger compartment heating mode is greater than or equal to the preset operating time Ts.

Specifically, a temperature sensor installed at the air outlet transmits the temperature signal sensed in real time to a controller or a central processing module, and compares the temperature signal with the preset target air outlet temperature in real time.

And the timer will be turned on at the same time when the passenger compartment heating mode is turned on, when the timer's timing is greater than or equal to the preset operating time Ts, a feedback signal will be sent to the controller or a central processing module.

S203, if yes, turning on a diversion mode and sending a preset control instruction to a target device to heat the battery by using the heat pump system.

In this step, the preset control instruction is used to heat coolant in a warm air circuit by the heat pump system, and divert the coolant to a battery circuit to heat the battery.

In this embodiment, the coolant circulation system includes the warm air circuit and the battery circuit.

Specifically, a first closed-loop control instruction is sent to a compressor in the heat pump system;

a first rotary speed control instruction is sent to a water pump in the warm air circuit, so as to increase rotary speed of the water pump from a first rotary speed to a second rotary speed in a first preset manner;

a diversion instruction is sent to a first multi-way valve, where the diversion instruction is used to switch a second output end of the first multi-way valve from a closed state to an open state in a second preset manner, so as to guide the coolant of the warm air circuit into the battery circuit, and to heat the battery through the coolant, where an input end and a first output end of the first multi-way valve are connected to the warm air circuit, and the second output end is connected to the battery circuit.

For example, as shown in FIG. 1, the first closed-loop control instruction sent to the compressor 101 includes: a closed-loop control instruction based on a combination of feedforward control and PID (Proportion Integral Differential) proportional integral differential control, or a closed-loop control instruction based on a combination of feedforward control and PI (Proportion Integral) proportional integral control.

It should be noted that those skilled in the art can select the required closed-loop control model according to the actual situation, which is not limited in the present application.

At the same time, a diverting instruction is sent to the three-way valve 107, that is, the first multi-way valve, so that the second output end C slowly opens at a preset opening rate, at the same time, the first rotary speed control instruction is sent to the warm air circuit pump 109, so that the warm air circuit pump 109 is slowly increased to a target rotary speed, that is, the second rotary speed, at a lower first rotary speed in a uniform acceleration or variable acceleration manner.

It should be noted that the operation of the warm air circuit pump 109 and the three-way valve 107 are coordinated with each other, and the purpose thereof is to control the rate of coolant flowing into the battery circuit is within a preset range to avoid excessive heat taken away by the coolant from the warm air core 105 due to an excessive rate, causing air temperature fluctuations at the air outlet of the passenger compartment, and reducing the using comfort of users in the passenger compartment. At the same time, it also avoids the rapid flow of heat to the battery circuit, which may cause the heating capacity of the heat pump system to fail to keep up timely, and even exceed the maximum heating capacity of the heat pump system in a short period of time, causing air temperature sharp fluctuations at the air outlet and sudden increase in the operating noise of the heat pump system, thereby affecting the user experience.

It should also be noted that the compressor 101, the warm air circuit pump 109 and three-way valve 107 cooperate with each other at the same time, those skilled in the art can flexibly match the control instructions of the three according to the needs of actual applications as long as the coolant diversion rate is controlled within the preset range, which belongs to the protection scope required by the present application.

The embodiment of the present application provides a vehicle heating control method as following: turning on a passenger compartment heating mode when detecting that a heating requirement exists in both a passenger compartment and a battery of a target vehicle, where the passenger compartment heating mode is used to perform heating process on air in the passenger compartment by using a heat exchanger of a heat pump system and/or a coolant circulation system in an air handling unit; then monitoring in real time whether air temperature at an air outlet or operating time of the passenger compartment heating mode meets a first preset requirement; if yes, turning on a diversion mode and sending a preset control instruction to a target device, where the preset control instruction is used to heat coolant in a warm air circuit by using the heat pump system, and divert the coolant to a battery circuit to heat the battery. It solves the technical problem that how to distribute and control heating capacity of new energy vehicles, and achieves the technical effect of using the heat pump system to heat the battery, not only improving heating efficiency but also saving energy.

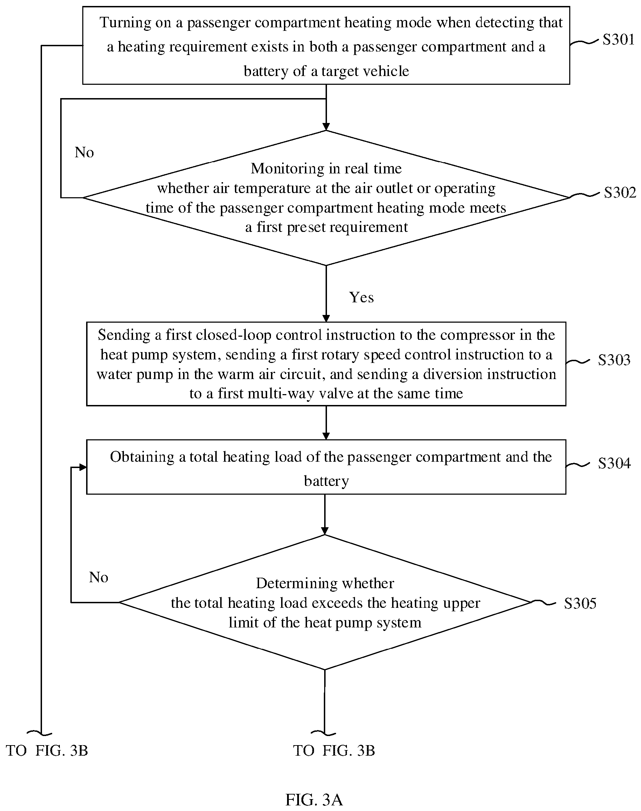

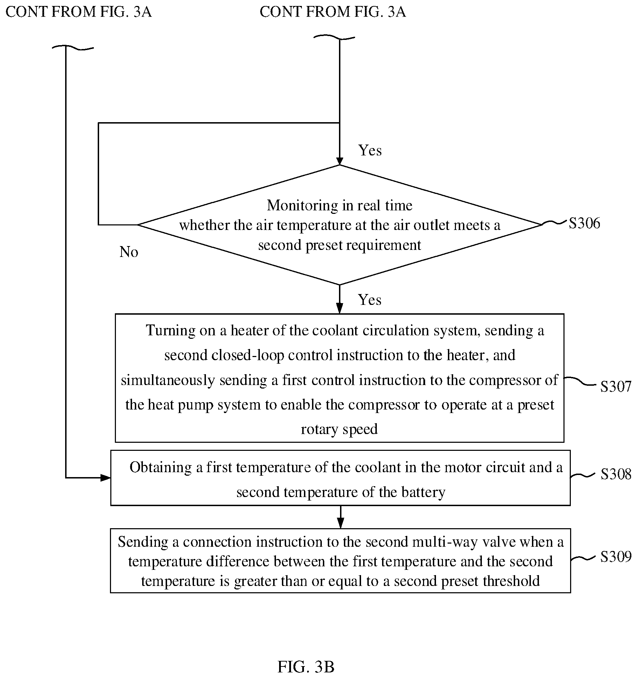

FIG. 3A and 3B are flowcharts of another vehicle heating control method provided by an embodiment of the present application. As shown in FIG. 3A and 3B, specific steps of the vehicle heating control method include the following.

S301, turning on a passenger compartment heating mode when detecting that a heating requirement exists in both a passenger compartment and a battery of a target vehicle.

This step is similar to S201, and will be described in detail below as a separate embodiment, and will not be repeated here.

S302, monitoring in real time whether air temperature at the air outlet or operating time of the passenger compartment heating mode meets a first preset requirement.

In this step, if yes, it continues to perform S303; if not, continues to perform loop monitoring.

In this embodiment, the first preset requirement includes: the air temperature at the air outlet reaches the target air outlet temperature, or the operating time of the passenger compartment heating mode is greater than or equal to the preset operating time Ts.

S303, sending a first closed-loop control instruction to the compressor in the heat pump system, sending a first rotary speed control instruction to a water pump in the warm air circuit, and sending a diversion instruction to a first multi-way valve at the same time.

In this step, the diversion instruction is used to switch a second output end of the first multi-way valve from a closed state to an open state in a second preset manner, so as to guide the coolant of the warm air circuit into the battery circuit, and to heat the battery through the coolant. The input end and the first output end of the first multi-way valve are connected to the warm air circuit, and the second output end is connected to the battery circuit. Where the first rotary speed control instruction is used to increase the speed of the water pump from a first rotary speed to a second rotary speed in a first preset manner. The first preset manner includes: uniform or non-uniform acceleration in which the acceleration is less than the preset acceleration threshold. The first closed-loop control instruction includes: a closed-loop control instruction that combines the feedforward control and the PI control.

The first closed-loop control instruction, the first rotary speed control instruction, and the first closed-loop control instruction cooperate with each other to slowly guide the coolant from the heater circuit to the battery circuit at a rate lower than the preset rate.

S304, obtaining a total heating load of the passenger compartment and the battery.

In this step, the total heating load includes the first heating load of the passenger compartment and the second heating load of the battery.

In this embodiment, the first heating load of the passenger compartment can be calculated according to the following formula:

first heating load = (target outlet air temperature - actual inlet air temperature) * blower air volume *air specific heat actual inlet air temperature = ambient temperature outside vehicle * external circulation percentage + indoor temperature * internal circulation percentage

In this embodiment, the second heating load of the battery can be calculated according to the following formula:

second heating load = (target battery temperature - battery circuit coolant temperature) * water pump output flow * coolant specific heat

It should be noted that, as for the specific calculation manners of the first heating load and the second heating load, those skilled in the art can choose other calculation manners according to actual scenarios, and the above formula is only one of the implementation manners.

S305, determining whether the total heating load exceeds the heating upper limit of the heat pump system.

In this step, if yes, it performs step S306. If not, it continues the loop monitoring.

S306, monitoring in real time whether the air temperature at the air outlet meets a second preset requirement.

In this step, the second preset requirement includes: the temperature difference between the air temperature at the air outlet and the target air outlet temperature is greater than or equal to the preset temperature difference threshold.

Since the coolant is guided into the battery circuit, it will inevitably take away part of the heat originally used to heat the air in the passenger compartment for heating the battery, causing the air outlet temperature lower than the target air outlet temperature. Therefore, it is necessary to detect whether the temperature difference is greater than or equal to the preset temperature difference threshold after turning on the diversion mode. If the second preset requirement is met, it proves that the heating capacity of the heat pump system is not enough to meet the current total heating demand, and the PTC heater needs to be turned on for auxiliary heating.

If the second preset requirement is met, it performs step S307;

otherwise, when the heater of the coolant circulation system is not turned on, it continues to monitor the circulation, and when the heater is already turned on, it turns off the heater.

S307, turning on a heater of the coolant circulation system, sending a second closed-loop control instruction to the heater, and simultaneously sending a first control instruction to the compressor of the heat pump system to enable the compressor to operate at a preset rotary speed.

In this step, the heater includes a PTC heater, where the PTC heater heats the coolant pipeline of the warm air circuit, thereby heating the coolant therein.

In this embodiment, the first control instruction includes operating at the maximum allowable speed under the current working conditions.

In order to make the air temperature at the air outlet of the passenger compartment reach the preset air outlet temperature in the shortest possible time, the compressor is turned on to the maximum heating power.

It should be noted that the preset rotary speed can also be smaller than the maximum rotary speed, and those skilled in the art can set it according to the actual situation, which is not limited in the present application.

In this embodiment, the coolant circulation system also includes a motor circuit, which simultaneously performs S308 while performing real-time monitoring in S302.

S308, obtaining a first temperature of the coolant in the motor circuit and a second temperature of the battery.

In this step, a temperature sensor is installed in the motor circuit, such as at the outlet of the motor cooling pipe, to detect the first temperature of the coolant. The second temperature sent by the battery management system is obtained through the bus.

S309, sending a connection instruction to the second multi-way valve when a temperature difference between the first temperature and the second temperature is greater than or equal to a second preset threshold.

In this step, the connection instruction is used to connect the motor circuit and the battery circuit, and transfer the heat generated by the motor operation to the battery through the coolant, so as to use the motor circuit to heat the battery, thereby achieving the technical effect of further energy saving.

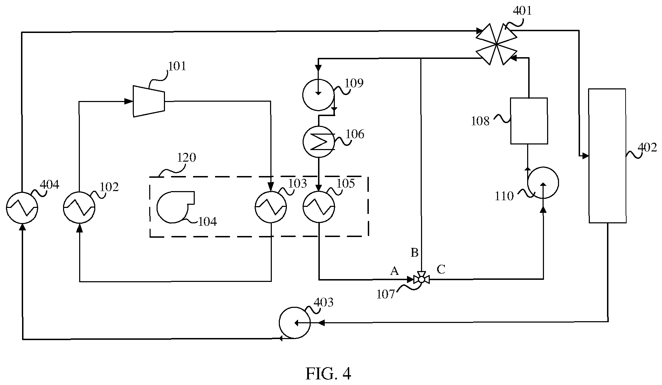

FIG. 4 is a schematic structural diagram of another vehicle-mounted heat pump system and coolant circulation system provided by the present application. As shown in FIG. 4, based on FIG. 1, the coolant circulation system also includes a motor circuit: a four-way valve 401, a motor 402, a motor circuit pump 403 and a cooling water tank 404.

After receiving the communication instruction, the four-way valve 401, that is, the second multi-way valve, connects the battery circuit and the motor circuit, so that the coolant in the motor circuit can enter the battery circuit. Since the motor generates heat in operation, this heat can be transferred to the battery through the coolant, thereby achieving the effect of energy saving.

The embodiment of the present application provides a vehicle heating control method as following: turning on a passenger compartment heating mode when detecting that a heating requirement exists in both a passenger compartment and a battery of a target vehicle, where the passenger compartment heating mode is used to perform heating process on air in the passenger compartment by using a heat exchanger of a heat pump system and/or a coolant circulation system in an air handling unit; then monitoring in real time whether air temperature at an air outlet or operating time of the passenger compartment heating mode meets a first preset requirement; if yes, turning on a diversion mode and sending a preset control instruction to a target device, where the preset control instruction is used to heat coolant in a warm air circuit by using the heat pump system, and divert the coolant to a battery circuit to heat the battery. It solves the technical problem that how to distribute and control heating capacity of new energy vehicles, and achieves the technical effect of using the heat pump system to heat the battery, not only improving heating efficiency but also saving energy.

For steps S201 and S301, in order to facilitate understanding, a possible implementation of the passenger compartment heating mode is introduced in detail below. This passenger compartment heating mode can be used when there is a separate heating requirement in the passenger compartment, or when there is a heating requirement in both the passenger compartment and the battery.

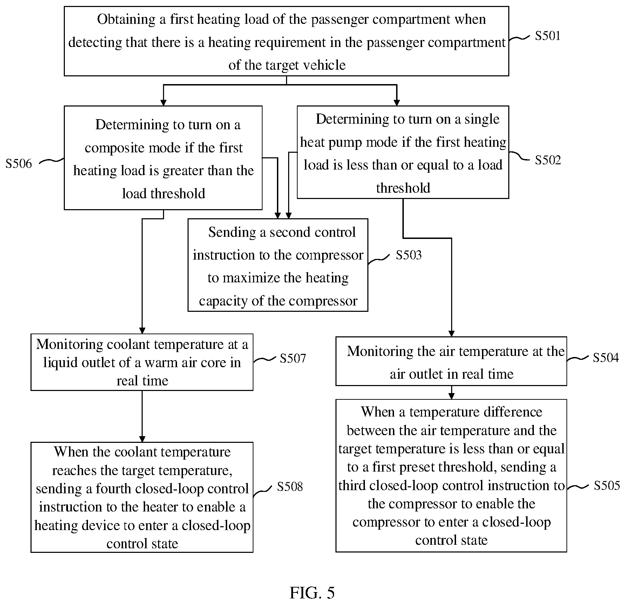

FIG. 5 is a flowchart of yet another vehicle heating control method provided by an embodiment of the present application. As shown in FIG. 5, specific steps of the vehicle heating control method include the following.

S501, obtaining a first heating load of the passenger compartment when detecting that there is a heating requirement in the passenger compartment of the target vehicle.

In this step, first heating load = (target outlet air temperature - evaporator outlet air temperature) * air volume passing through the warm air core * air specific heat.

It should be noted that the above calculation manner is only one implementation of the first heating load. Those skilled in the art can choose other calculation manners according to actual application scenarios, which is not limited in the present application.

S502, determining to turn on a single heat pump mode if the first heating load is less than or equal to a load threshold.

In this step, the single heat pump mode is used to individually control the heat pump system to heat the air in the passenger compartment.

The first heating load is less than or equal to the load threshold, which proves that the heat pump system is sufficient to provide sufficient heating capacity to meet the heating needs of the passenger compartment. Therefore, the compressor is allowed to quickly raise the temperature of the passenger compartment with maximum heating capacity to improve the user experience. After the temperature at the air outlet reaches the preset target temperature, the compressor enters closed-loop control to reduce temperature fluctuations at the air outlet and achieve energy-saving technical effects.

S503, sending a second control instruction to the compressor to maximize the heating capacity of the compressor.

In this step, the second control instruction includes a control instruction that causes the compressor to operate at the highest speed of the current working condition.

S504, monitoring the air temperature at the air outlet in real time.

In this step, the temperature sensor installed at the air outlet of the passenger compartment detects the air temperature at the air outlet in real time and transmits the temperature signal to the controller or the processing module.

S505, when a temperature difference between the air temperature and the target temperature is less than or equal to a first preset threshold, sending a third closed-loop control instruction to the compressor to enable the compressor to enter a closed-loop control state.

S506, determining to turn on a composite mode if the first heating load is greater than the load threshold.

In this step, the composite mode is used to heat the air by using simultaneously at least one heat pump system and at least one coolant circulation system.

S507, monitoring coolant temperature at a liquid outlet of a warm air core in real time.

S508, when the coolant temperature reaches the target temperature, sending a fourth closed-loop control instruction to the heater to enable the heater to enter a closed-loop control state.

For each of the above steps, specifically, when there is a heating requirement in the passenger compartment, based on the ambient temperature outside the vehicle, the temperature inside the vehicle, the difference between the evaporator outlet air temperature and the target air outlet temperature, and the air volume passing through the warm air core, it is determined whether to use the compressor alone to heat the passenger compartment or to simultaneously turn on the compressor and the PTC heater to heat the passenger compartment in the initial stage. When the heat pump works alone, that is, in the single heat pump mode, the compressor first operates at the upper limit speed of this working condition. When the target air outlet temperature - the air outlet temperature $\leq$ the first preset threshold T1 (T1 is a variable quantification), it enters a closed-loop control strategy combining feedforward control with PI or PID. When the heat pump and the PTC heater work at the same time, that is, in the composite mode, the compressor operates at the upper limit speed of this working condition. At the beginning, the PTC heater works at the maximum power that can be operated, but when the outlet water temperature of the warm air core reaches the target outlet temperature, the control strategy of the PTC heater is changed into a closed-loop control strategy combining the feedforward control with the PI or the PID.

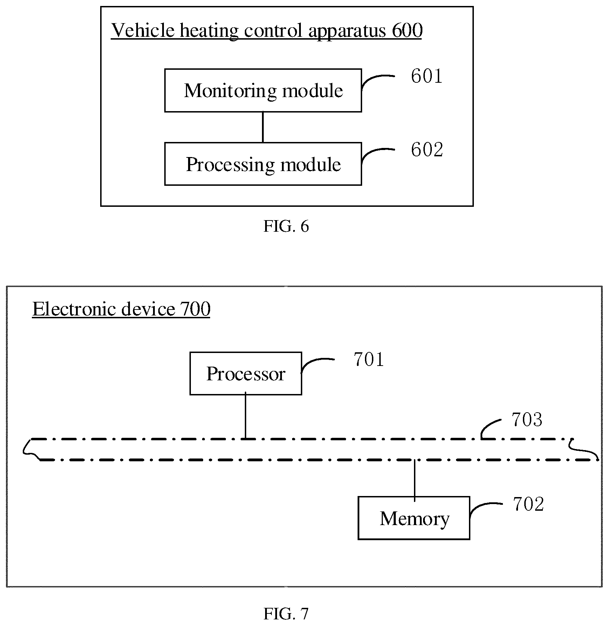

FIG. 6 is a schematic structural diagram of a vehicle heating control apparatus provided by an embodiment of the present application. The vehicle heating control apparatus 600 can be implemented by software, hardware, or a combination of both.

As shown in FIG. 6, the vehicle heating control apparatus 600 includes:

a processing module 602, configured to turn on a passenger compartment heating mode when detecting that a heating requirement exists in both a passenger compartment and a battery of a target vehicle, where the passenger compartment heating mode is used to perform heating process on air in the passenger compartment by using a heat exchanger of a heat pump system and/or a coolant circulation system in the air handling unit;

a monitoring module 601, configured to monitor in real time air temperature at an air outlet and operating time of the passenger compartment heating mode;

when the air temperature or the operating time meets a first preset requirement, the processing module 602 is also configured to turn on a diversion mode and sending a preset control instruction to a target device, where the preset control instruction is used to heat coolant in a warm air circuit by using the heat pump system, and divert the coolant to a battery circuit to heat the battery, where the coolant circulation system includes the warm air circuit and the battery circuit.

In a possible design, the processing module 602 is configured to:

send a first closed-loop control instruction to a compressor in the heat pump system;

send a first rotary speed control instruction to a water pump in the warm air circuit, so as to increase rotary speed of the water pump from a first rotary speed to a second rotary speed in a first preset manner;

send a diversion instruction to a first multi-way valve, where the diversion instruction is used to switch a second output end of the first multi-way valve from a closed state to an open state in a second preset manner, so as to guide the coolant of the warm air circuit into the battery circuit, and to heat the battery through the coolant, where an input end and a first output end of the first multi-way valve are connected to the warm air circuit, and the second output end is connected to the battery circuit.

In a possible design, the monitoring module 601 is also configured to obtain a total heating load of the passenger compartment and the battery; and

the processing module 602 is also configured to determine whether the total heating load exceeds heating upper limit of the heat pump system; if yes, turn on a heater of the coolant circulation system to supplement heat.

In a possible design, the monitoring module 601 is also configured to monitor in real time whether the air temperature at the air outlet meets a second preset requirement;

if yes, the processing module 602 is also configured to turn on the heater; send a second closed-loop control instruction to the heater; and send a first control instruction to the compressor to enable the compressor to operate at a preset rotary speed;
if not, the processing module 602 is also configured to turn off the heater.

In a possible design, the monitoring module 601 is configured to obtain a first heating load of the passenger compartment;
the processing module 602 is configured to:

determine to turn on a single heat pump mode when the first heating load is less than or equal to a load threshold, where the single heat pump mode is used to individually control the heat pump system to heat the air in the passenger compartment;
send a second control instruction to the compressor to maximize heating capacity of the compressor;
the monitoring module 601 is further configured to:

monitor the air temperature at the air outlet in real time;
send a third closed-loop control instruction to the compressor to enable the compressor to enter a closed-loop control state when a temperature difference between the air temperature and target temperature is less than or equal to a first preset threshold.

In a possible design, the processing module 602 is configured to:

determine to turn on a composite mode when the first heating load is greater than the load threshold, where the composite mode is used to heat the air by simultaneously using at least one heat pump system and at least one coolant circulation system;
send the second control instruction to the compressor;
the monitoring module 601 is further configured to:

monitor coolant temperature at a liquid outlet of a warm air core in real time;
send a fourth closed-loop control instruction to the heater to enable the heater to enter a closed-loop control state when the coolant temperature reaches the target temperature.

In a possible design, the monitoring module 601 is also configured to obtain a first temperature of the coolant in the motor circuit and a second temperature of the battery; and
the processing module 602 is also configured to send a connection instruction to a second multi-way valve to connect the motor circuit and the battery circuit when a temperature difference between the first temperature and the second temperature is greater than or equal to a second preset threshold, and to transfer heat generated by operation of a motor to the battery through the coolant.

It is worth noting that the apparatus provided in the embodiment shown in FIG. 6 can execute the method provided in any of the above method embodiments. The specific implementation principles, technical features, professional terminology explanations, and technical effects are similar, and will not be repeated here.

FIG. 7 is a schematic structural diagram of an electronic device provided by an embodiment of the present application. As shown in FIG. 7, the electronic device 700 can include: at least one processor 701 and a memory 702. FIG. 7 shows an electronic device taking one processor as an example.

The memory 702 is configured to store a program. Specifically, the program may include a program code which includes computer operating instructions.

The memory 702 may include a high-speed RAM memory, and may also include a non-volatile memory, such as at least one disk memory.

The processor 701 is configured to execute computer execution instructions stored in the memory 702 to implement the method described in any of the above method embodiments.

The processor 701 may be a central processing unit (CPU), an application specific integrated circuit (ASIC), or configured to be one or more integrated circuits to implement the embodiments of the present application.

Optionally, the memory 702 can be independent or integrated with the processor 701. When the memory 702 is a device independent of the processor 701, the electronic device 700 may also include:
a bus 703, configured to connect the processor 701 and the memory 702. The bus may be an industry standard architecture (ISA) bus, a peripheral component interconnect (PCI) bus or an extended industry standard architecture (EISA) bus, etc. The bus can be divided into an address bus, a data bus, a control bus, etc., but it does not mean that there is only one bus or one type of bus.

Optionally, in terms of specific implementation, if the memory 702 and the processor 701 are integrated on one chip, the memory 702 and the processor 701 can communicate through an internal interface.

An embodiment of the present application also provides a computer-readable storage medium. The computer-readable storage medium may include: an U disk, a mobile hard disk, a read-only memory (ROM), a random access memory (RAM), a magnetic disk or an optical disk, and other media that can store program codes, specifically, the computer-readable storage medium stores program instructions, and the program instructions are used for the methods in the above method embodiments.

An embodiment of the present application also provides a computer program product, including a computer program which, when executed by a processor, implements the methods in the above method embodiments.

An embodiment of the present application also provides a computer program which, when executed by a processor, implements the methods in the above method embodiments.

The above are only specific implementations of the present invention, but the protection scope of the present invention is not limited thereto. Changes that can be easily thought of by any technical personnel familiars with the technical field within the technical scope of the claims should be covered by the protection scope of the present invention. Therefore, the protection scope of the present invention is defined by the claims.

**Claims**

1. A vehicle heating control method, comprising:

   turning on (S201, S301) a passenger compartment heating mode when detecting that a heating requirement exists in both a passenger compartment and a battery of a target vehicle, wherein the passenger compartment heating mode is used to perform heating process on air in the passenger compartment by using a heat exchanger of a heat pump system and/or a coolant circulation system in an air handling unit;
   monitoring (S202, S302) in real time whether air temperature at an air outlet or operating time of the passenger compartment heating mode meets a first preset requirement;
   if the air temperature at the air outlet or the operating time of the passenger compartment heating mode meets the first preset requirement, turning on (S203) a diversion mode and sending a preset control instruction to a target device, **characterized in that** the preset control instruction is used to heat coolant in a warm air circuit by using the heat pump system, and divert the coolant to a battery circuit to heat the battery, wherein the coolant circulation system comprises the warm air circuit and the battery circuit.

2. The vehicle heating control method according to claim 1, wherein the turning on (S203) the diversion mode and sending the preset control instruction to the target device comprises:

   sending (S303) a first closed-loop control instruction to a compressor in the heat pump system;
   sending (S303) a first rotary speed control instruction to a water pump in the warm air circuit, so as to increase rotary speed of the water pump from a first rotary speed to a second rotary speed in a first preset manner;
   sending (S303) a diversion instruction to a first multi-way valve, wherein the diversion instruction is used to switch a second output end of the first multi-way valve from a closed state to an open state in a second preset manner, so as to guide the coolant in the warm air circuit into the battery circuit, and to heat the battery through the coolant, wherein an input end and a first output end of the first multi-way valve are connected to the warm air circuit, and the second output end is connected to the battery circuit.

3. The vehicle heating control method according to claim 2, wherein the turning on (S203) the diversion mode and sending the preset control instruction to the target device further comprises:

   obtaining (S304) a total heating load of the passenger compartment and the battery;
   determining (S305) whether the total heating load exceeds heating upper limit of the heat pump system;
   if the total heating load exceeds the heating upper limit of the heat pump system, turning on a heater of the coolant circulation system to supplement heat.

4. The vehicle heating control method according to claim 3, wherein before turning on the heater of the coolant circulation system to supplement heat, the method further comprises:

   monitoring (S306) in real time whether the air temperature at the air outlet meets a second preset requirement;
   if the air temperature at the air outlet meets the second preset requirement, turning on (S307) the heater;
   sending (S307) a second closed-loop control instruction to the heater;
   sending (S307) a first control instruction to the compressor to enable the compressor to operate at a preset rotary speed;
if the air temperature at the air outlet does not meet the second preset requirement, turning off the heater.

5. The vehicle heating control method according to any one of claims 2 to 4, wherein the turning on (S201, S301) the passenger compartment heating mode comprises:

obtaining (S501) a first heating load of the passenger compartment;
determining (S502) to turn on a single heat pump mode if the first heating load is less than or equal to a load threshold, wherein the single heat pump mode is used to individually control the heat pump system to heat the air in the passenger compartment;
sending (S503) a second control instruction to the compressor to maximize heating capacity of the compressor;
monitoring (S504) the air temperature at the air outlet in real time;
sending (S505) a third closed-loop control instruction to the compressor to enable the compressor to enter a closed-loop control state when a temperature difference between the air temperature and target temperature is less than or equal to a first preset threshold.

6. The vehicle heating control method according to claim 5, further comprising:

determining (S506) to turn on a composite mode when the first heating load is greater than the load threshold, wherein the composite mode is used to heat the air by simultaneously using at least one heat pump system and at least one coolant circulation system;
sending (S503) the second control instruction to the compressor;
monitoring (S507) coolant temperature at a liquid outlet of a warm air core in real time;
sending (S508) a fourth closed-loop control instruction to the heater to enable the heater to enter a closed-loop control state when the coolant temperature reaches the target temperature.

7. The vehicle heating control method according to any one of claims 1 to 6, wherein the coolant circulation system further comprises a motor circuit, and after turning on (S201, S301) the passenger compartment heating mode, the method further comprises:

obtaining (S308) a first temperature of the coolant in the motor circuit and a second temperature of the battery;
sending (S309) a connection instruction to a second multi-way valve to connect the motor circuit and the battery circuit when a temperature difference between the first temperature and the second temperature is greater than or equal to a second preset threshold, and to transfer heat generated by operation of a motor to the battery through the coolant.

8. A vehicle heating control apparatus (600), comprising:

a processing module (602), configured to turn on a passenger compartment heating mode when detecting that a heating requirement exists in both a passenger compartment and a battery (108) of a target vehicle, wherein the passenger compartment heating mode is used to perform heating process on air in the passenger compartment by using a heat exchanger of a heat pump system and/or a coolant circulation system in an air handling unit (120);
a monitoring module (601), configured to monitor in real time air temperature at an air outlet and operating time of the passenger compartment heating mode;
when the air temperature or the operating time meets a first preset requirement, the processing module (602) is also configured to turn on a diversion mode and send a preset control instruction to a target device, **characterized in that** the preset control instruction is used to heat coolant in a warm air circuit by using the heat pump system, and divert the coolant to a battery circuit to heat the battery (108), wherein the coolant circulation system comprises the warm air circuit and the battery circuit.

9. The vehicle heating control apparatus (600) according to claim 8, wherein the processing module (602) is further configured to:

send a first closed-loop control instruction to a compressor (101) in the heat pump system;
send a first rotary speed control instruction to a water pump in the warm air circuit, so as to increase rotary speed of the water pump from a first rotary speed to a second rotary speed in a first preset manner;
send a diversion instruction to a first multi-way valve, wherein the diversion instruction is used to switch a second output end of the first multi-way valve from a closed state to an open state in a second preset manner, so as to guide the coolant in the warm air circuit into the battery circuit, and to heat the battery (108) through the coolant, wherein an input end and a first output end of the first multi-way valve are connected to the warm air circuit, and the second output end is connected to the battery circuit.

10. The vehicle heating control apparatus (600) according to claim 9, wherein the monitoring module (601) is further configured to:

obtain a total heating load of the passenger compartment and the battery (108);
the processing module (602) is further configured to:

determine whether the total heating load exceeds heating upper limit of the heat pump system;
if the total heating load exceeds the heating upper limit of the heat pump system, turn on a heater of the coolant circulation system to supplement heat.

11. The vehicle heating control apparatus (600) according to claim 10, wherein before turning on the heater of the coolant circulation system to supplement heat, the monitoring module (601) is further configured to:

monitor in real time whether the air temperature at the air outlet meets a second preset requirement;
if the air temperature at the air outlet meets the second preset requirement, the processing module (602) is further configured to:

turn on the heater;
send a second closed-loop control instruction to the heater;
send a first control instruction to the compressor (101) to enable the compressor (101) to operate at a preset rotary speed;
if the air temperature at the air outlet does not meet the second preset requirement, turn off the heater.

12. The vehicle heating control apparatus (600) according to any one of claims 9 to 11, wherein the monitoring module (601) is further configured to:

obtain a first heating load of the passenger compartment;
the processing module (602) is further configured to:

determine to turn on a single heat pump mode if the first heating load is less than or equal to a load threshold, wherein the single heat pump mode is used to individually control the heat pump system to heat the air in the passenger compartment;
send a second control instruction to the compressor (101) to maximize heating capacity of the compressor;
the monitoring module (601) is further configured to:

monitor the air temperature at the air outlet in real time;
send a third closed-loop control instruction to the compressor (101) to enable the compressor (101) to enter a closed-loop control state when a temperature difference between the air temperature and target temperature is less than or equal to a first preset threshold.

13. The vehicle heating control apparatus (600) according to claim 12, wherein the processing module (602) is further configured to:

determine to turn on a composite mode when the first heating load is greater than the load threshold, wherein the composite mode is used to heat the air by simultaneously using at least one heat pump system and at least one coolant circulation system;
send the second control instruction to the compressor (101);
the monitoring module (601) is further configured to:

monitor coolant temperature at a liquid outlet of a warm air core (105) in real time;
send a fourth closed-loop control instruction to the heater to enable the heater to enter a closed-loop control state when the coolant temperature reaches the target temperature.

14. The vehicle heating control apparatus (600) according to claim 8, wherein after turning on the passenger compartment heating mode, the monitoring module (601) is further configured to:

obtain a first temperature of the coolant in the motor circuit and a second temperature of the battery (108);
the processing module (602) is further configured to:
send a connection instruction to a second multi-way valve to connect the motor circuit and the battery circuit when a temperature difference between the first temperature and the second temperature is greater than or equal to a second preset threshold, and to transfer heat generated by operation of a motor to the battery (108) through the coolant.

15. A computer-readable storage medium, wherein the computer-readable storage medium stores computer execution instructions which, when executed by a processor, implement the method according to any one of claims 1 to 7.


**Patentansprüche**

1. Verfahren zur Fahrzeugheizungssteuerung, umfassend:

Einschalten (S201, S301) eines Fahrgastraum-Heizmodus, wenn erkannt wird, dass sowohl in einem Fahrgastraum als auch in einer Batterie eines Zielfahrzeugs eine Heizanforderung besteht, wobei der Fahrgastraum-Heizmodus verwendet wird, um einen Heizprozess der Luft in dem Fahrgastraum durchzuführen, indem ein Wärmetauscher eines Wärmepumpensystems und/oder eines Kühlmittelkreislaufsystems in einem Lüftungsgerät verwendet wird;
Überwachen (S202, S302) in Echtzeit, ob die Lufttemperatur an einem Luftauslass oder die Betriebszeit des Fahrgastraum-Heizmodus eine erste voreingestellte Anforderung erfüllt;
wenn die Lufttemperatur an dem Luftauslass oder die Betriebszeit des Fahrgastraum-Heizmodus die erste voreingestellte Anforderung erfüllt, Einschalten (S203) eines Umlenkungsmodus und Senden einer voreingestellten Steueranweisung an eine Zielvorrichtung, **dadurch gekennzeichnet, dass**
die voreingestellte Steueranweisung verwendet wird, um Kühlmittel in einem Warmluftkreislauf durch Verwenden des Wärmepumpensystems zu erwärmen und das Kühlmittel zu einem Batteriekreislauf umzulenken, um die Batterie zu erwärmen, wobei das Kühlmittelkreislaufsystem den Warmluftkreislauf und den Batteriekreislauf umfasst.

2. Verfahren zur Fahrzeugheizungssteuerung nach Anspruch 1, wobei das Einschalten (S203) des Umlenkungsmodus und das Senden der voreingestellten Steueranweisung an die Zielvorrichtung Folgendes umfasst:

Senden (S303) einer ersten Steueranweisung mit geschlossenem Regelkreis an einen Verdichter in dem Wärmepumpensystem;
Senden (S303) einer ersten Steueranweisung für eine Drehzahl an eine Wasserpumpe in dem Warmluftkreislauf, um so die Drehzahl der Wasserpumpe auf eine erste voreingestellte Weise von einer ersten Drehzahl auf eine zweite Drehzahl zu erhöhen;
Senden (S303) einer Umlenkungsanweisung an ein erstes Mehrwegeventil, wobei die Umlenkungsanweisung verwendet wird, um ein zweites Ausgangsende des ersten Mehrwegeventils auf eine zweite voreingestellte Weise aus einem geschlossenen Zustand in einen offenen Zustand umzuschalten, um so das Kühlmittel in dem Warmluftkreislauf in den Batteriekreislauf zu führen und die Batterie durch das Kühlmittel zu erwärmen, wobei ein Eingangsende und ein erstes Ausgangsende des ersten Mehrwegeventils mit dem Warmluftkreislauf verbunden sind und das zweite Ausgangsende mit dem Batteriekreislauf verbunden ist.

3. Verfahren zur Fahrzeugheizungssteuerung nach Anspruch 2, wobei das Einschalten (S203) des Umlenkungsmodus und das Senden der voreingestellten Steueranweisung an die Zielvorrichtung ferner Folgendes umfasst:

Erhalten (S304) einer Gesamtheizlast des Fahrgastraums und der Batterie;
Bestimmen (S305), ob die Gesamtheizlast eine obere Heizgrenze des Wärmepumpensystems überschreitet;
wenn die Gesamtheizlast die obere Heizgrenze des Wärmepumpensystems überschreitet, Einschalten einer Heizung des Kühlmittelkreislaufsystems, um Wärme zu ergänzen.

4. Verfahren zur Fahrzeugheizungssteuerung nach Anspruch 3, wobei vor dem Einschalten der Heizung des Kühlmittelkreislaufsystems, um Wärme zu ergänzen, das Verfahren ferner Folgendes umfasst:

Überwachen (S306) in Echtzeit, ob die Lufttemperatur an dem Luftauslass eine zweite voreingestellte Anforderung erfüllt;

wenn die Lufttemperatur an dem Luftauslass die zweite voreingestellte Anforderung erfüllt, Einschalten (S307) der Heizung;

Senden (S307) einer zweiten Steueranweisung mit geschlossenem Regelkreis an die Heizung;

Senden (S307) einer ersten Steueranweisung an den Verdichter, um es dem Verdichter zu ermöglichen, mit einer voreingestellten Drehzahl zu arbeiten;

wenn die Lufttemperatur an dem Luftauslass die zweite voreingestellte Anforderung nicht erfüllt, Ausschalten der Heizung.

5. Verfahren zur Fahrzeugheizungssteuerung nach einem der Ansprüche 2 bis 4, wobei das Einschalten (S201, S301) des Fahrgastraum-Heizmodus Folgendes umfasst:

Erhalten (S501) einer ersten Heizlast des Fahrgastraums;

Bestimmen (S502), einen Modus einer einzelnen Wärmepumpe einzuschalten, wenn die erste Heizlast kleiner oder gleich einer Schwellenlast ist, wobei der Modus einer einzelnen Wärmepumpe verwendet wird, um das Wärmepumpensystem einzeln zu steuern, um die Luft in dem Fahrgastraum zu erwärmen;

Senden (S503) einer zweiten Steueranweisung an den Verdichter, um die Heizkapazität des Verdichters zu maximieren;

Überwachen (S504) der Lufttemperatur an dem Luftauslass in Echtzeit;

Senden (S505) einer dritten Steueranweisung mit geschlossenem Regelkreis an den Verdichter, um es dem Verdichter zu ermöglichen, in einen Steuerzustand mit geschlossenem Regelkreis einzutreten, wenn eine Temperaturdifferenz zwischen der Lufttemperatur und der Zieltemperatur kleiner oder gleich einem ersten voreingestellten Schwellenwert ist.

6. Verfahren zur Fahrzeugheizungssteuerung nach Anspruch 5, ferner umfassend:

Bestimmen (S506), einen Mischmodus einzuschalten, wenn die erste Heizlast größer als der Lastschwellenwert ist, wobei der Mischmodus verwendet wird, um die Luft zu erwärmen, indem gleichzeitig mindestens ein Wärmepumpensystem und mindestens ein Kühlmittelkreislaufsystem verwendet werden;

Senden (S503) der zweiten Steueranweisung an den Verdichter;

Überwachen (S507) der Kühlmitteltemperatur an einem Flüssigkeitsauslass eines warmen Luftkerns in Echtzeit;

Senden (S508) einer vierten Steueranweisung mit geschlossenem Regelkreis an die Heizung, um es der Heizung zu ermöglichen, in einen Steuerzustand mit geschlossenem Regelkreis einzutreten, wenn die Kühlmitteltemperatur die Zieltemperatur erreicht.

7. Verfahren zur Fahrzeugheizungssteuerung nach einem der Ansprüche 1 bis 6, wobei das Kühlmittelkreislaufsystem ferner einen Motorstromkreislauf umfasst und das Verfahren nach dem Einschalten (S201, S301) des Fahrgastraum-Heizmodus ferner Folgendes umfasst:

Erhalten (S308) einer ersten Temperatur des Kühlmittels in dem Motorkreislauf und einer zweiten Temperatur der Batterie;

Senden (S309) einer Verbindungsanweisung an ein zweites Mehrwegeventil, um den Motorkreislauf und den Batteriekreislauf zu verbinden, wenn eine Temperaturdifferenz zwischen der ersten Temperatur und der zweiten Temperatur größer oder gleich einem zweiten voreingestellten Schwellenwert ist, und Wärme, die durch den Betrieb eines Motors erzeugt wird, durch das Kühlmittel an die Batterie zu übertragen.

8. Vorrichtung (600) zur Fahrzeugheizungssteuerung, umfassend:

ein Verarbeitungsmodul (602), das dazu konfiguriert ist, einen Fahrgastraum-Heizmodus einzuschalten, wenn erkannt wird, dass sowohl in einem Fahrgastraum als auch in einer Batterie (108) eines Zielfahrzeugs eine Heizanforderung besteht, wobei der Fahrgastraum-Heizmodus verwendet wird, um einen Heizprozess der Luft in dem Fahrgastraum durchzuführen, indem ein Wärmetauscher eines Wärmepumpensystems und/oder eines Kühlmittelkreislaufsystems in einem Lüftungsgerät (120) verwendet wird;

ein Überwachungsmodul (601), das dazu konfiguriert ist, die Lufttemperatur an einem Luftauslass in Echtzeit und die Betriebszeit des Fahrgastraum-Heizmodus zu überwachen;

wobei, wenn die Lufttemperatur oder die Betriebszeit eine erste voreingestellte Anforderung erfüllt, das Verarbeitungsmodul (602) außerdem dazu konfiguriert ist, einen Umlenkungsmodus einzuschalten und eine voreingestellte Steueranweisung an eine Zielvorrichtung zu senden, **dadurch gekennzeichnet, dass**
die voreingestellte Steueranweisung verwendet wird, um Kühlmittel in einem Warmluftkreislauf durch Verwenden des Wärmepumpensystems zu erwärmen und das Kühlmittel zu einem Batteriekreislauf umzulenken, um die Batterie (108) zu erwärmen, wobei das Kühlmittelkreislaufsystem den Warmluftkreislauf und den Batteriekreislauf umfasst.

9. Vorrichtung (600) zur Fahrzeugheizungssteuerung nach Anspruch 8, wobei das Verarbeitungsmodul (602) ferner zu Folgendem konfiguriert ist:

Senden einer ersten Steueranweisung mit geschlossenem Regelkreis an einen Verdichter (101) in dem Wärmepumpensystem;
Senden einer ersten Steueranweisung für eine Drehzahl an eine Wasserpumpe in dem Warmluftkreislauf, um so die Drehzahl der Wasserpumpe auf eine erste voreingestellte Weise von einer ersten Drehzahl auf eine zweite Drehzahl zu erhöhen;
Senden einer Umlenkungsanweisung an ein erstes Mehrwegeventil, wobei die Umlenkungsanweisung verwendet wird, um ein zweites Ausgangsende des ersten Mehrwegeventils auf eine zweite voreingestellte Weise aus einem geschlossenen Zustand in einen offenen Zustand umzuschalten, um so das Kühlmittel in dem Warmluftkreislauf in den Batteriekreislauf zu führen und die Batterie (108) durch das Kühlmittel zu erwärmen, wobei ein Eingangsende und ein erstes Ausgangsende des ersten Mehrwegeventils mit dem Warmluftkreislauf verbunden sind und das zweite Ausgangsende mit dem Batteriekreislauf verbunden ist.

10. Vorrichtung (600) zur Fahrzeugheizungssteuerung nach Anspruch 9, wobei das Überwachungsmodul (601) ferner zu Folgendem konfiguriert ist:

Erhalten einer Gesamtheizlast des Fahrgastraums und der Batterie (108);
wobei das Verarbeitungsmodul (602) ferner zu Folgendem konfiguriert ist:

Bestimmen, ob die Gesamtheizlast eine obere Heizgrenze des Wärmepumpensystems überschreitet;
wenn die Gesamtheizlast die obere Heizgrenze des Wärmepumpensystems überschreitet, Einschalten einer Heizung des Kühlmittelkreislaufsystems, um Wärme zu ergänzen.

11. Vorrichtung (600) zur Fahrzeugheizungssteuerung nach Anspruch 10, wobei das Überwachungsmodul (601) vor dem Einschalten der Heizung des Kühlmittelkreislaufsystems, um Wärme zu ergänzen, ferner zu Folgendem konfiguriert ist:

Überwachen in Echtzeit, ob die Lufttemperatur an dem Luftauslass eine zweite voreingestellte Anforderung erfüllt;
wenn die Lufttemperatur an dem Luftauslass die zweite voreingestellte Anforderung erfüllt, das Verarbeitungsmodul (602) ferner zu Folgendem konfiguriert ist:

Einschalten der Heizung;
Senden einer zweiten Steueranweisung mit geschlossenem Regelkreis an die Heizung;
Senden einer ersten Steueranweisung an den Verdichter (101), um es dem Verdichter (101) zu ermöglichen, mit einer voreingestellten Drehzahl zu arbeiten;
wenn die Lufttemperatur an dem Luftauslass die zweite voreingestellte Anforderung nicht erfüllt, Ausschalten der Heizung.

12. Vorrichtung (600) zur Fahrzeugheizungssteuerung nach einem der Ansprüche 9 bis 11, wobei das Überwachungsmodul (601) ferner zu Folgendem konfiguriert ist:

Erhalten einer ersten Heizlast des Fahrgastraums;
wobei das Verarbeitungsmodul (602) ferner zu Folgendem konfiguriert ist:

Bestimmen, einen Modus einer einzelnen Wärmepumpe einzuschalten, wenn die erste Heizlast kleiner oder gleich einer Schwellenlast ist, wobei der Modus einer einzelnen Wärmepumpe verwendet wird, um das Wärmepumpensystem einzeln zu steuern, um die Luft in dem Fahrgastraum zu erwärmen;
Senden einer zweiten Steueranweisung an den Verdichter (101), um die Heizkapazität des Verdichters zu maximieren;

wobei das Überwachungsmodul (601) ferner zu Folgendem konfiguriert ist:

Überwachen der Lufttemperatur an dem Luftauslass in Echtzeit;
Senden einer dritten Steueranweisung mit geschlossenem Regelkreis an den Verdichter (101), um es dem Verdichter (101) zu ermöglichen, in einen Steuerzustand mit geschlossenem Regelkreis einzutreten, wenn eine Temperaturdifferenz zwischen der Lufttemperatur und der Zieltemperatur kleiner oder gleich einem ersten voreingestellten Schwellenwert ist.

**13.** Vorrichtung (600) zur Fahrzeugheizungssteuerung nach Anspruch 12, wobei das Verarbeitungsmodul (602) ferner zu Folgendem konfiguriert ist:

Bestimmen, einen Mischmodus einzuschalten, wenn die erste Heizlast größer als der Lastschwellenwert ist, wobei der Mischmodus verwendet wird, um die Luft zu erwärmen, indem gleichzeitig mindestens ein Wärmepumpensystem und mindestens ein Kühlmittelkreislaufsystem verwendet werden;
Senden der zweiten Steueranweisung an den Verdichter (101);
wobei das Überwachungsmodul (601) ferner zu Folgendem konfiguriert ist:

Überwachen der Kühlmitteltemperatur an einem Flüssigkeitsauslass eines warmen Luftkerns (105) in Echtzeit;
Senden einer vierten Steueranweisung mit geschlossenem Regelkreis an die Heizung, um es der Heizung zu ermöglichen, in einen Steuerzustand mit geschlossenem Regelkreis einzutreten, wenn die Kühlmitteltemperatur die Zieltemperatur erreicht.

**14.** Vorrichtung (600) zur Fahrzeugheizungssteuerung nach Anspruch 8, wobei nach dem Einschalten des Fahrgastraum-Heizmodus das Überwachungsmodul (601) ferner zu Folgendem konfiguriert ist:

Erhalten einer ersten Temperatur des Kühlmittels in dem Motorkreislauf und einer zweiten Temperatur der Batterie (108);
wobei das Verarbeitungsmodul (602) ferner zu Folgendem konfiguriert ist:
Senden einer Verbindungsanweisung an ein zweites Mehrwegeventil, um den Motorkreislauf und den Batteriekreislauf zu verbinden, wenn eine Temperaturdifferenz zwischen der ersten Temperatur und der zweiten Temperatur größer oder gleich einem zweiten voreingestellten Schwellenwert ist, und Wärme, die durch den Betrieb eines Motors erzeugt wird, durch das Kühlmittel an die Batterie (108) zu übertragen.

**15.** Computerlesbares Speichermedium, wobei auf dem computerlesbaren Speichermedium computerausführbare Anweisungen gespeichert sind, die bei Ausführung durch einen Prozessor das Verfahren nach einem der Ansprüche 1 bis 7 umsetzen.

**Revendications**

**1.** Procédé de commande de chauffage d'un véhicule, comprenant :

l'activation (S201, S301) d'un mode de chauffage d'un habitacle lors de la détection d'un besoin de chauffage à la fois dans un habitacle et dans une batterie d'un véhicule cible, dans lequel le mode de chauffage de l'habitacle est utilisé pour effectuer un processus de chauffage de l'air dans l'habitacle en utilisant un échangeur de chaleur d'un système de pompe à chaleur et/ou d'un système de circulation de fluide de refroidissement dans une centrale de traitement d'air ;
la surveillance (S202, S302) en temps réel pour vérifier si la température de l'air à une sortie d'air ou le temps de fonctionnement du mode de chauffage de l'habitacle répond à une première exigence prédéfinie ;
si la température de l'air à la sortie d'air ou la durée de fonctionnement du mode de chauffage de l'habitacle satisfait à la première condition prédéfinie, l'activation (S203) d'un mode de déviation et l'envoi d'une instruction de commande prédéfinie à un dispositif cible,
**caractérisé en ce que**
l'instruction de commande prédéfinie est utilisée pour chauffer le liquide de refroidissement dans un circuit d'air chaud à l'aide du système de pompe à chaleur, et pour dévier le liquide de refroidissement vers un circuit de batterie afin de chauffer la batterie, dans lequel le système de circulation de liquide de refroidissement comprend le circuit d'air chaud et le circuit de batterie.

EP 4 344 911 B1

**2.** Procédé de commande de chauffage de véhicule selon la revendication 1, dans lequel l'activation (S203) du mode de déviation et l'envoi de l'instruction de commande prédéfinie au dispositif cible comprennent :

l'envoi (S303) d'une première instruction de commande en boucle fermée à un compresseur du système de pompe à chaleur ;
l'envoi (S303) d'une première instruction de commande de vitesse de rotation à une pompe à eau dans le circuit d'air chaud, afin d'augmenter la vitesse de rotation de la pompe à eau d'une première vitesse de rotation à une deuxième vitesse de rotation d'une première manière prédéfinie ;
l'envoi (S303) d'une instruction de déviation à une première vanne multivoies, dans lequel l'instruction de déviation est utilisée pour faire passer une deuxième extrémité de sortie de la première vanne multivoies d'un état fermé à un état ouvert d'une deuxième manière prédéfinie, afin de guider le liquide de refroidissement du circuit d'air chaud vers le circuit de batterie et de chauffer la batterie à travers le liquide de refroidissement, dans lequel une extrémité d'entrée et une première extrémité de sortie de la première vanne multivoies sont connectées au circuit d'air chaud, et la deuxième extrémité de sortie est connectée au circuit de batterie.

**3.** Procédé de commande de chauffage de véhicule selon la revendication 2, dans lequel l'activation (S203) du mode de déviation et l'envoi de l'instruction de commande prédéfinie au dispositif cible comprennent en outre :

l'obtention (S304) d'une charge de chauffage totale de l'habitacle et de la batterie ;
la détermination (S305) si la charge de chauffage totale dépasse la limite supérieure de chauffage du système de pompe à chaleur ;
si la charge de chauffage totale dépasse la limite supérieure de chauffage du système de pompe à chaleur, l'activation d'un réchauffeur du système de circulation de fluide de refroidissement pour fournir un apport de chaleur supplémentaire.

**4.** Procédé de commande de chauffage de véhicule selon la revendication 3, dans lequel, avant d'activer le réchauffeur du système de circulation de liquide de refroidissement pour fournir un chauffage d'appoint, le procédé comprend en outre :

la surveillance (S306) en temps réel pour vérifier si la température de l'air à la sortie d'air répond à une deuxième exigence prédéfinie ;
si la température de l'air à la sortie d'air répond à la deuxième exigence prédéfinie, l'activation (S307) du chauffage ;
l'envoi (S307) d'une deuxième instruction de commande en boucle fermée au chauffage ;
l'envoi (S307) d'une première instruction de commande au compresseur pour permettre au compresseur de fonctionner à une vitesse de rotation prédéfinie ;
si la température de l'air à la sortie d'air ne répond pas à la deuxième exigence prédéfinie, le réchauffeur s'éteint.

**5.** Procédé de commande de chauffage de véhicule selon l'une quelconque des revendications 2 à 4, dans lequel l'activation (S201, S301) du mode de chauffage d'habitacle comprend :

l'obtention (S501) d'une première charge de chauffage de l'habitacle ;
la détermination (S502) d'activer un mode de pompe à chaleur unique si la première charge de chauffage est inférieure ou égale à un seuil de charge, dans lequel le mode de pompe à chaleur unique est utilisé pour commander individuellement le système de pompe à chaleur afin de chauffer l'air dans l'habitacle ;
l'envoi (S503) d'une deuxième instruction de commande au compresseur pour maximiser la capacité de chauffage du compresseur ;
la surveillance (S504) de la température de l'air à la sortie d'air en temps réel ;
l'envoi (S505) d'une troisième instruction de commande en boucle fermée au compresseur pour permettre au compresseur d'entrer dans un état de commande en boucle fermée lorsqu'une différence de température entre la température de l'air et la température cible est inférieure ou égale à un premier seuil prédéfini.

**6.** Procédé de commande de chauffage de véhicule selon la revendication 5, comprenant en outre :

la détermination (S506) d'activer un mode composite lorsque la première charge de chauffage est supérieure au seuil de charge, dans lequel le mode composite est utilisé pour chauffer l'air en utilisant simultanément au moins un système de pompe à chaleur et au moins un système de circulation de fluide de refroidissement ;
l'envoi (S503) de la deuxième instruction de commande au compresseur ;

19

la surveillance (S507) de la température du liquide de refroidissement à une sortie de liquide d'un noyau d'air chaud en temps réel ;

l'envoi (S508) d'une quatrième instruction de commande en boucle fermée au réchauffeur pour permettre au réchauffeur d'entrer dans un état de commande en boucle fermée lorsque la température du liquide de refroidissement atteint la température cible.

7. Procédé de commande de chauffage de véhicule selon l'une quelconque des revendications 1 à 6, dans lequel le système de circulation de liquide de refroidissement comprend en outre un circuit de moteur, et après l'activation (S201, S301) du mode de chauffage d'habitacle, le procédé comprend en outre :

l'obtention (S308) d'une première température du liquide de refroidissement dans le circuit de moteur et d'une deuxième température de la batterie ;

l'envoi (S309) d'une instruction de connexion à une deuxième vanne multivoies pour connecter le circuit de moteur et le circuit de batterie lorsqu'une différence de température entre la première température et la deuxième température est supérieure ou égale à un deuxième seuil prédéfini, et pour transférer la chaleur générée par le fonctionnement d'un moteur à la batterie à travers le liquide de refroidissement.

8. Appareil de commande de chauffage pour véhicule (600), comprenant :

un module de traitement (602), configuré pour activer un mode de chauffage d'habitacle lors de la détection qu'un besoin de chauffage existe à la fois dans l'habitacle et dans la batterie (108) d'un véhicule cible, dans lequel le mode de chauffage d'habitacle est utilisé pour effectuer un processus de chauffage d'air dans l'habitacle en utilisant un échangeur de chaleur d'un système de pompe à chaleur et/ou d'un système de circulation de liquide de refroidissement dans une unité de traitement d'air (120) ;

un module de surveillance (601), configuré pour surveiller en temps réel la température de l'air à une sortie d'air et le temps de fonctionnement du mode de chauffage d'habitacle ;

lorsque la température de l'air ou le temps de fonctionnement répond à une première exigence prédéfinie, le module de traitement (602) est également configuré pour activer un mode de déviation et envoyer une instruction de commande prédéfinie à un dispositif cible,

**caractérisé en ce que**

l'instruction de commande prédéfinie est utilisée pour chauffer le fluide de refroidissement dans un circuit d'air chaud à l'aide du système de pompe à chaleur, et dévier le fluide de refroidissement vers un circuit de batterie pour chauffer la batterie (108), dans lequel le système de circulation de fluide de refroidissement comprend le circuit d'air chaud et le circuit de batterie.

9. Appareil de commande de chauffage de véhicule (600) selon la revendication 8, dans lequel le module de traitement (602) est en outre configuré pour :

envoyer une première instruction de commande en boucle fermée à un compresseur (101) dans le système de pompe à chaleur ;

envoyer une première instruction de commande de vitesse de rotation à une pompe à eau dans le circuit d'air chaud, afin d'augmenter la vitesse de rotation de la pompe à eau d'une première vitesse de rotation à une deuxième vitesse de rotation d'une première manière prédéfinie ;

envoyer une instruction de déviation à une première vanne multivoies, dans lequel l'instruction de déviation est utilisée pour faire passer une deuxième extrémité de sortie de la première vanne multivoies d'un état fermé à un état ouvert d'une deuxième manière prédéfinie, afin de guider le liquide de refroidissement du circuit d'air chaud vers le circuit de batterie et de chauffer la batterie (108) à travers le liquide de refroidissement, dans lequel une extrémité d'entrée et une première extrémité de sortie de la première vanne multivoies sont connectées au circuit d'air chaud, et la deuxième extrémité de sortie est connectée au circuit de batterie.

10. Appareil de commande de chauffage de véhicule (600) selon la revendication 9, dans lequel le module de surveillance (601) est en outre configuré pour :

obtenir une charge de chauffage totale de l'habitacle et de la batterie (108) ;

le module de traitement (602) est en outre configuré pour :

déterminer si la charge de chauffage totale dépasse la limite supérieure de chauffage du système de pompe à chaleur ;

si la charge de chauffage totale dépasse la limite supérieure de chauffage du système de pompe à chaleur, activer un élément chauffant du système de circulation de fluide de refroidissement pour fournir un apport de chaleur supplémentaire.

11. Appareil de commande de chauffage de véhicule (600) selon la revendication 10, dans lequel, avant d'activer le réchauffeur du système de circulation de liquide de refroidissement pour fournir une chaleur supplémentaire, le module de surveillance (601) est en outre configuré pour :

surveiller en temps réel si la température de l'air à la sortie d'air répond à une deuxième exigence prédéfinie ;
si la température de l'air à la sortie d'air satisfait à la deuxième exigence prédéfinie, le module de traitement (602) est configuré en outre pour :

allumer le réchauffeur ;
envoyer une deuxième instruction de commande en boucle fermée au réchauffeur ;
envoyer une première instruction de commande au compresseur (101) pour permettre au compresseur (101) de fonctionner à une vitesse de rotation prédéfinie ;
si la température de l'air à la sortie d'air ne répond pas à la deuxième exigence prédéfinie, éteindre le réchauffeur.

12. Appareil de commande de chauffage de véhicule (600) selon l'une quelconque des revendications 9 à 11, dans lequel le module de surveillance (601) est en outre configuré pour :

obtenir une première charge de chauffage de l'habitacle ;
le module de traitement (602) est en outre configuré pour :

déterminer d'activer un mode de pompe à chaleur unique si la première charge de chauffage est inférieure ou égale à un seuil de charge, le mode de pompe à chaleur unique étant utilisé pour commander individuellement le système de pompe à chaleur afin de chauffer l'air dans l'habitacle ;
envoyer une deuxième instruction de commande au compresseur (101) pour maximiser la capacité de chauffage du compresseur ;
le module de surveillance (601) est en outre configuré pour :

surveiller en temps réel la température de l'air à la sortie d'air ;
envoyer une troisième instruction de commande en boucle fermée au compresseur (101) pour permettre au compresseur (101) d'entrer dans un état de commande en boucle fermée lorsqu'une différence de température entre la température de l'air et la température cible est inférieure ou égale à un premier seuil prédéfini.

13. Appareil de commande de chauffage de véhicule (600) selon la revendication 12, dans lequel le module de traitement (602) est en outre configuré pour :

déterminer d'activer un mode composite lorsque la première charge de chauffage est supérieure au seuil de charge, dans lequel le mode composite est utilisé pour chauffer l'air en utilisant simultanément au moins un système de pompe à chaleur et au moins un système de circulation de fluide de refroidissement ;
envoyer la deuxième instruction de commande au compresseur (101) ;
le module de surveillance (601) est en outre configuré pour :

surveiller en temps réel la température du liquide de refroidissement à la sortie d'un noyau d'air chaud (105) ;
envoyer une quatrième instruction de commande en boucle fermée au réchauffeur pour permettre au réchauffeur d'entrer dans un état de commande en boucle fermée lorsque la température du liquide de refroidissement atteint la température cible.

14. Appareil de commande de chauffage de véhicule (600) selon la revendication 8, dans lequel, après l'activation du mode de chauffage d'habitacle, le module de surveillance (601) est en outre configuré pour :

obtenir une première température du liquide de refroidissement dans le circuit de moteur et une deuxième température de la batterie (108) ;
le module de traitement (602) est en outre configuré pour :

envoyer une instruction de connexion à une deuxième vanne multivoies pour connecter le circuit de moteur et le circuit de batterie lorsqu'une différence de température entre la première température et la deuxième température est supérieure ou égale à un deuxième seuil prédéfini, et pour transférer la chaleur générée par le fonctionnement d'un moteur à la batterie (108) à travers le liquide de refroidissement.

**15.** Support de stockage lisible par ordinateur, dans lequel le support de stockage lisible par ordinateur stocke des instructions d'exécution informatique qui, lorsqu'elles sont exécutées par un processeur, mettent en œuvre le procédé selon l'une quelconque des revendications 1 à 7.

FIG. 1

| |
|---|
| Turning on a passenger compartment heating mode when detecting that a heating requirement exists in both a passenger compartment and a battery of a target vehicle |

S201

| |
|---|
| Monitoring in real time whether air temperature at an air outlet or operating time of the passenger compartment heating mode meets a first preset requirement |

S202

| |
|---|
| If yes, turning on a diversion mode and sending a preset control instruction to the target device to heat the battery by using the heat pump system |

S203

FIG. 2

Turning on a passenger compartment heating mode when detecting that a heating requirement exists in both a passenger compartment and a battery of a target vehicle ⌇S301

No

Monitoring in real time whether air temperature at the air outlet or operating time of the passenger compartment heating mode meets a first preset requirement ⌇S302

Yes

Sending a first closed-loop control instruction to the compressor in the heat pump system, sending a first rotary speed control instruction to a water pump in the warm air circuit, and sending a diversion instruction to a first multi-way valve at the same time ⌇S303

Obtaining a total heating load of the passenger compartment and the battery ⌇S304

No

Determining whether the total heating load exceeds the heating upper limit of the heat pump system ⌇S305

TO FIG. 3B                    TO FIG. 3B

FIG. 3A

CONT FROM FIG. 3A          CONT FROM FIG. 3A

Yes

Monitoring in real time
whether the air temperature at the air outlet meets a
second preset requirement ⟩～S306

No

Yes

Turning on a heater of the coolant circulation system, sending a
second closed-loop control instruction to the heater, and
simultaneously sending a first control instruction to the compressor of ～ S307
the heat pump system to enable the compressor to operate at a preset
rotary speed

Obtaining a first temperature of the coolant in the motor circuit and a ～ S308
second temperature of the battery

Sending a connection instruction to the second multi-way valve when a
temperature difference between the first temperature and the second ～ S309
temperature is greater than or equal to a second preset threshold

FIG. 3B

FIG. 4

Obtaining a first heating load of the passenger compartment when detecting that there is a heating requirement in the passenger compartment of the target vehicle — S501

Determining to turn on a composite mode if the first heating load is greater than the load threshold — S506

Determining to turn on a single heat pump mode if the first heating load is less than or equal to a load threshold — S502

Sending a second control instruction to the compressor to maximize the heating capacity of the compressor — S503

Monitoring coolant temperature at a liquid outlet of a warm air core in real time — S507

Monitoring the air temperature at the air outlet in real time — S504

When the coolant temperature reaches the target temperature, sending a fourth closed-loop control instruction to the heater to enable a heating device to enter a closed-loop control state — S508

When a temperature difference between the air temperature and the target temperature is less than or equal to a first preset threshold, sending a third closed-loop control instruction to the compressor to enable the compressor to enter a closed-loop control state — S505

FIG. 5

Vehicle heating control apparatus 600

Monitoring module ⌐ 601

Processing module ⌐ 602

FIG. 6

Electronic device 700

Processor ⌐ 701

⌐ 703

Memory ⌐ 702

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020101815 A1